# EUROPÄISCHE PATENTSCHRIFT

(11) **EP 3 429 920 B1**
(45) Veröffentlichungstag und Bekanntmachung des Hinweises auf die Patenterteilung: **29.04.2020**
(21) Anmeldenummer: 17711105.1
(22) Anmeldetag: 08.03.2017
(51) Int. Cl.: B63H 25/26

(54) **LINEARANTRIEB FÜR EINE SCHIFFRUDERMASCHINE**
LINEAR DRIVE FOR A SHIP STEERING ENGINE
ENTRAÎNEMENT LINÉAIRE POUR L'APPAREIL À GOUVERNER D'UN NAVIRE

(30) Priorität: 15.03.2016 DE 102016204248
(43) Veröffentlichungstag der Anmeldung: 23.01.2019
(73) Patentinhaber: thyssenkrupp Marine Systems GmbH, 24143 Kiel (DE); thyssenkrupp AG, 45143 Essen (DE)
(72) Erfinder: KÖRNER, Roland, 24248 Mönkeberg (DE); WIERMANN, Volker, 24113 Kiel (DE)
(74) Vertreter: thyssenkrupp Intellectual Property GmbH
(86) Internationale Anmeldenummer: PCT/EP2017/055380
(87) Internationale Veröffentlichungsnummer: WO 2017/157728

(56) Entgegenhaltungen:
- DE-A1- 10 039 992
- DE-A1- 19 519 948
- GB-A- 2 011 556
- US-A- 963 090
- US-A- 3 088 744

## Beschreibung

Die Erfindung betrifft einen Linearantrieb für eine Schiffrudermaschine mit einer Spindel und einer Spindelmutter. Die Spindelmutter ist mit einem Schubrohr verbunden. Die Spindel ist ortsfest gelagert, die Spindelmutter und das Schubrohr werden linear bewegt.

Heute werden oftmals hydraulische angetriebene Zylinder für große Stellkräfte, insbesondere Rudermaschinen, verwendet. Der Zylinder wirkt über eine Schubstange und einen Hebel auf die Ruderwelle. Aufgrund der besseren Energieeffizienz wird zunehmend auf elektromotorisch angetriebene Stellantriebe übergegangen.

In der DE 101 58 870 A1 ist eine redundante elektrische Antriebsvorrichtung zum Antrieb eines Ruders an einem Schiff mit einem eine Gewindespindel und eine Spindelmutter aufweisenden Gewindetrieb und mit zwei elektrischen Drehmomentmotoren, die eine Hohlwelle aufweisen, die hintereinander konzentrisch zu dem Gewindetrieb angeordnet sind und die das eine Teil des Gewindetriebs gemeinsam oder einzeln in entgegengesetzte Drehrichtungen anzutreiben vermögen, offenbart. Die beiden Elektromotoren besitzen eine gemeinsame Hohlwelle und das drehbare Teil des Gewindetriebs ist verdrehsicher mit der Hohlwelle verbunden oder die Hohlwelle selbst.

Aus der DE 10 2010 015 665 A1 ist ein Linearantrieb für eine Schiffsrudermaschine bekannt, bei dem ein Gewindetrieb mit Gewindespindel und Spindelmutter von mindestens einem elektrischen Torquemotor rotatorisch angetrieben wird, wobei ein als Hohlwelle ausgebildeter Rotor des Torquemotors mit dem Gewindetrieb in Verbindung steht. Der Torquemotor ist ein rippelkraftfreier Synchron-Torquemotor. Der Gewindetrieb ist ein losefreier Planetenrollengewindetrieb. Der Torquemotor bildet mit dem rotierenden Teil des Gewindetriebs einen einheitlichen Rotor, der in lediglich zwei Rotorlagerungen gelagert ist. Wenigstens eine der Rotorlagerungen ist mindestens axial vorgespannt.

Aus der DE 20 2005 005 848 U1 ist eine Rudermaschine für ein Schiff mit mindestens zwei elektromotorischen Antrieben, von denen einer ein Hauptmotor und der andere ein Hilfsmotor ist, mindestens zwei redundanten Sensoren zum Erfassen der Winkellage des Ruderblatts und mindestens einer Steuerung bekannt. Mindestens zwei redundante Steuerungen sind vorgesehen, die jeweils mit dem Hauptmotor und jeweils einem Sensor verbunden sind, während eine dritte Steuerung mit dem Hilfsmotor verbunden ist, wobei Haupt- und Hilfsmotor eine gemeinsame Antriebswelle aufweisen.

Aus der DE 100 39 992 A1 ist eine Vorrichtung zur Beeinflussung der Bewegungsrichtung von U-Booten bekannt. Die Vorrichtung weist ein Lineargetriebe auf.

Aus der DE 10 2007 048 061 A1 ist ein Lenkaktuator für ein Steer-by-wire Schiffsteuersystem bekannt.

Aus der EP 1 972 546 A1 ist eine Steuervorrichtung für ein Wasserfahrzeug bekannt.

Aus der US 963 090 A ist eine Steuervorrichtung bekannt.

Aus der US 962 268 A ist eine Steuervorrichtung bekannt.

Aus der DE 579089 A ist ein Stoßdämpfer für eine hydraulische Ruderanlage bekannt.

Aufgabe der Erfindung ist es, eine Antriebsvorrichtung für eine leise und zuverlässige Schiffrudermaschine zu schaffen.

Gelöst wird diese Aufgabe durch einen Linearantrieb für eine Schiffrudermaschine mit den in Anspruch 1 angegebenen Merkmalen. Vorteilhafte Weiterbildungen ergeben sich aus den Unteransprüchen, der nachfolgenden Beschreibung sowie der Zeichnung.

Der erfindungsgemäße Linearantrieb für eine Schiffrudermaschine weist eine Spindel und eine Spindelmutter auf, wobei die Spindelmutter mit einem Schubrohr verbunden ist, wobei die Spindel ortsfest gelagert ist und die Spindelmutter und das Schubrohr linear bewegt werden.

Unter ortsfest ist im Sinne der Erfindung zu verstehen, dass die betreffende Komponente, zum Beispiel die Spindel, keine Translation im Verhältnis zum Schiff erfährt. Die Spindel kann an ihrem Ort jedoch rotatorisch bewegt werden.

Bei herkömmlichen Linearantrieben wird die Spindel bewegt und treibt das Ruder an, die Spindelmutter ist ortsfest. Ist jedoch die Spindel ortsfest und die Spindelmutter bewegbar, so wird ein Schubrohr benötigt, um die Bewegung auf das Ruder zu übertragen, wobei das Schubrohr die Spindel auf einer Seite der Spindelmutter umgibt und sich über die Spindel hinaus erstreckt. Dadurch wird jedoch nicht die Spindel mit dem Gewinde ausgefahren, insbesondere wird nicht das Gewinde der Umgebung, insbesondere dem Wasser ausgesetzt. Hierdurch ist der Linearantrieb zuverlässiger und baut kürzer.

Erfindungsgemäß weist der Linearantrieb ein erstes Gehäuse auf, wobei das erste Gehäuse den Bereich der Spindel umgibt, auf welchem die Spindelmutter bewegbar ist.

Erfindungsgemäß ist das erste Gehäuse dichtend mit dem Schubrohr und dichtend mit der Spindel verbunden.

Unter dichtend wird verstanden, dass die Verbindung, zum Beispiel mit Hilfe einer Dichtung für Flüssigkeiten im Wesentlichen undurchlässig ist. Unter im Wesentlichen wird verstanden, dass nur bei großen Druckdifferenzen messbare Flüssigkeitsmengen durchtreten.

Erfindungsgemäß weist die Spindelmutter oder das Schubrohr wenigstens eine erste Dichtung auf, wobei die wenigstens eine erste Dichtung zum ersten Gehäuse dichtend abschließt.

Erfindungsgemäß wird durch das erste Gehäuse, die Spindel, die Spindeldichtung, das Schubrohr und die erste Dichtung ein erster Bereich gebildet.

Erfindungsgemäß wird durch das erste Gehäuse, das Schubrohr (ggf. auch die Spindelmutter), die Schubrohrdichtung und die erste Dichtung ein zweiter Bereich gebildet.

Erfindungsgemäß sind der erste Bereich und der zweite Bereich flüssigkeitsgefüllt. Besonders bevorzugt weist die Flüssigkeit die Spindel schmierende Eigenschaften auf. Bevorzugt handelt es sich bei der Flüssigkeit um Schmieröl, Hydrauliköl oder sogenanntes Spindelöl. Die Flüssigkeit kann Additive aufweisen.

Erfindungsgemäß sind der erste Bereich und der zweite Bereich mit einem ersten Druckausgleichsbehälter verbunden.

Als ein Beispiel das nicht zur Erfindung gehört ist alternativ der erste Bereich mit einem ersten Druckausgleichsbehälter verbunden und der zweite Bereich ist mit einem zweiten Druckausgleichsbehälter verbunden.

In einer weiteren Ausführungsform der Erfindung weist der erste Druckausgleichsbehälter einen Kolben, eine Kolbenstange und einen Kolbenzylinder auf, wobei der erste Druckausgleichsbehälter einen dritten Bereich und einen vierten Bereich aufweist, wobei der dritte Bereich mit dem ersten Bereich und dem zweiten Bereich verbunden ist und wobei die Kolbenstange im dritten Bereich angeordnet ist. Durch die Anordnung der Kolbenstange im dritten Bereich ist die Flüssigkeit bedeckte Fläche des Kolbens kleiner als die Fläche des Kolbens im vierten Bereich. Hierdurch ergibt sich, dass der Druck im dritten Bereich entsprechend höher sein muss als im vierten Bereich, damit von beiden Seiten gleich große Kräfte auf den Kolben wirken. Dies führt dazu, dass bei einer Undichtigkeit zwischen Kolben und Kolbenzylinder Flüssigkeit aus dem dritten Bereich austreten und in den vierten Bereich eintreten kann, nicht jedoch anders herum. Dadurch ist verhindert, dass die Flüssigkeit selbst verunreinigt werden kann.

In einer weiteren Ausführungsform der Erfindung weist der vierte Bereich eine Verbindung zum umgebenden Wasser auf. Insbesondere in Unterseebooten kann der umgebende Wasserdruck eine große Gegenkraft darstellen. Indem der Außendruck auch auf den vierten Bereich wirkt, befindet sich auch der dritte Bereich und somit auch der erste Bereich und der zweite Bereich praktisch unter Umgebungsdruck. Hierdurch muss der Linearantrieb nicht gegen den Außendruck arbeiten, die Leistungsaufnahme ist entsprechend geringer.

In einer weiteren Ausführungsform der Erfindung ist der erste Bereich über ein erstes Ventil mit dem dritten Bereich verbunden. In einer weiteren Ausführungsform der Erfindung ist der zweite Bereich über ein zweites Ventil mit dem dritten Bereich verbunden ist.

Kann wenigstens der erste Bereich oder der zweite Bereich so abgesperrt werden, dass keine Flüssigkeit hinein bzw. hinaus kann, so kann die Spindel praktisch nicht mehr bewegt werden, da Flüssigkeiten praktisch nicht kompressibel sind. Hierdurch kann das Ruder, beispielsweise im Hafen oder beim Ausfall des elektrischen Systems einfach in einer Position festgehalten werden.

In einer weiteren Ausführungsform der Erfindung weist der Linearantrieb eine erste Feder und eine zweite Feder auf, wobei die erste Feder und die zweite Feder an gegenüberliegenden Positionen des Bereiches angeordnet sind, in welchem die Spindelmutter auf der Spindel bewegbar ist. Die erste Feder und die zweite Feder dienen dazu, einen an sich nicht erwünschten Anschlag der Spindelmutter aufzunehmen. Ein Anschlag erzeugt immer ein Geräusch. Ein solches Geräusch kann die Position des Schiffes, insbesondere eines getauchten Unterseeboots, verraten. Besonders bevorzugt ist die erste Feder eine erste Tellerfeder und die zweite Feder ist eine zweite Tellerfeder.

In einer weiteren Ausführungsform der Erfindung weist der Linearantrieb einen ersten Elektromotor auf, wobei der erste Elektromotor an dem ersten Gehäuse angeordnet ist, wobei der erste Elektromotor über eine federnde Lagerung mit dem ersten Gehäuse verbunden ist.

In einer weiteren Ausführungsform der Erfindung weist der Linearantrieb einen zweiten Elektromotor auf, wobei der zweite Elektromotor an dem ersten Gehäuse angeordnet ist, wobei der zweite Elektromotor über eine federnde Lagerung mit dem ersten Gehäuse verbunden ist.

In einer weiteren Ausführungsform der Erfindung erzeugen der erste Elektromotor und der zweite Elektromotor gemeinsam das notwendige Nenndrehmoment. Der erste und zweite Motor sind dabei vorzugsweise so angeordnet, dass sie einen gemeinsamen Rotor und eine gemeinsame Statoraufnahme haben. In dieser bevorzugten Anordnung sind die Motoren mit der gemeinsamen Statoraufnahme elastisch und/oder federnd mit dem Gehäuse verbunden. Die Motoren wirken gemeinsam über eine elastische Kupplung auf die Spindel. Hierdurch können zum einen beide Elektromotoren kleiner ausgelegt werden, zum anderen ist ein Antrieb des Ruders, wenn auch mit verminderter Leistung, auch nach Ausfall eines der beiden Elektromotoren möglich. Es ist natürlich auch möglich mehr als zwei Motoren derartig anzuordnen.

In einer weiteren Ausführungsform der Erfindung weist der Linearantrieb einen Lagesensor auf, wobei der Lagesensor die Lage der Spindelmutter detektiert. Bevorzugt ist der Lagesensor ein magnetostriktiver Lagesensor.

In einer weiteren Ausführungsform der Erfindung weist der Linearantrieb einen pneumatischen, hydraulischen oder manuellen Hilfsantrieb, bevorzugt einen manuellen Hilfsantrieb, aufweist. Besonders bevorzugt ist der Hilfsantrieb zuschaltbar verbunden.

Nachfolgend ist ein erfindungsgemäßer Linearantrieb anhand eines in der Zeichnung dargestellten Ausführungsbeispiels näher erläutert.

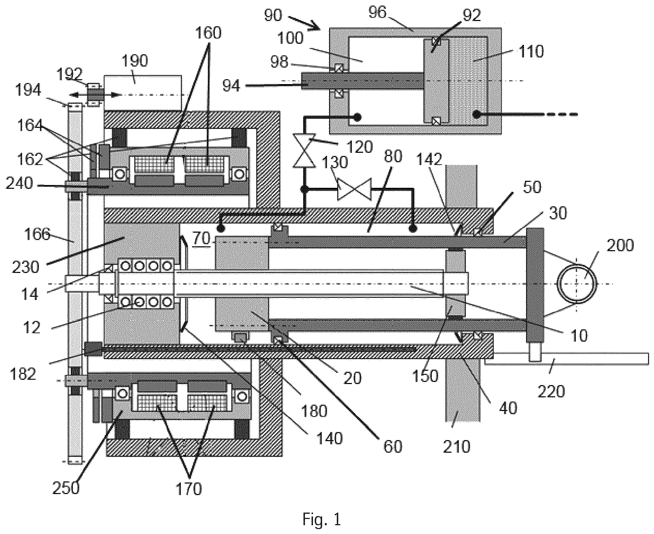

- Fig. 1: skizzierter Querschnitt durch einen Linearantrieb

In Fig. 1 ist ein Querschnitt durch einen Linearantrieb gezeigt. Der Linearantrieb weist eine Spindel 10 auf, welche ortsfest sich im Spindellager 12 drehen kann. Hierdurch bewegt sich die Spindelmutter 20 in der Abbildung von rechts nach links bzw. von links nach rechts, je nach Drehrichtung der Spindel 10. Durch die Spindelmutter 20 bewegt sich auch das Schubrohr 30. Das Schubrohr 30 umgibt den rechten Teil der Spindel, sodass auf der rechten Seite die Anlenkung 200 für das Rudergestänge (nicht gezeigt) angeordnet ist. Somit fährt nur das Schubrohr 30 aus dem Druckkörper 210 aus und bewegt über die Anlenkung 200 das Ruder. Die Spindel 10 kommt somit nicht mit dem den Druckkörper 210 umgebenden Wasser in Kontakt.

Das erste Gehäuse 40 umgibt den Bereich, in dem die Spindelmutter 20 auf der Spindel 10 bewegbar ist. Mit der Schubrohrdichtung 50 und der Spindeldichtung 14 umschließt das erste Gehäuse 40 diesen Bereich flüssigkeitsdicht zusammen mit dem Schubrohr 30 und der Spindel 10 und dem Spindellagergehäuse 230. Der Raum innerhalb des ersten Gehäuses 40 wird durch die erste Dichtung 60 in einen ersten Bereich 70 und einen zweiten Bereich 80 getrennt. Die erste Dichtung 60 ist im gezeigten Fall am Schubrohr 30 angeordnet, diese könnte aber auch etwas nach links versetzt an der Spindelmutter 20 angeordnet sein.

Der erste Bereich 70 und der zweite Bereich 80 sind flüssigkeitsgefüllt, wobei es sich bei der Flüssigkeit um Schmieröl, insbesondere Spindelöl, handelt. Da durch das Aus- und Einfahren der Spindelmutter 20 und des Schubrohrs 30 das Gesamtvolumen des ersten Bereichs 70 und des zweitens Bereichs 80 geändert wird, sind der erste Bereich 70 und der zweite Bereich 80 mit dem dritten Bereich 100 des Druckausgleichsbehälters 90 verbunden. Der Druckausgleichsbehälter 90 weist einen Kolben 92, eine Kolbenstange 94 und einen Kolbenzylinder 96 auf. Die Kolbenstange 94 ist im dritten Bereich 100 angeordnet und über die Kolbendichtung 98 abgedichtet. Durch diese Anordnung der Kolbenstange 94 ist der Druck im dritten Bereich 100 höher als im vierten Bereich 110. Der vierte Bereich 110 ist mit dem umgebenden Wasser verbunden und befindet sich somit bei dem der Tauchtiefe entsprechendem Außendruck. Durch den höheren Druck im dritten Bereich 100 kann kein Wasser aus dem vierten Bereich 110 eindringen, selbst wenn eine Undichtigkeit des Kolbens 92 vorliegt.

Besonders bevorzugt ist das Querschnittsverhältnis von Kolben 92 zu Kolbenstange 94 gleich dem Querschnittsverhältnis von Spindelmutter 20 (ggf. zuzüglich umgebendem Schubrohr 30) zu Spindel 10. Hierdurch gleichen sich die Druckdifferenzen exakt aus.

Die Verbindung vom erstem Bereich 70 zum dritten Bereich 100 kann durch das erste Ventil 120 unterbrochen werden, die Verbindung vom zweiten Bereich 80 zum dritten Bereich 100 kann durch das zweite Ventil 130 unterbrochen werden. Im gezeigten Fall kann zusätzlich auch das erste Ventil 120 die Verbindung vom zweiten Bereich 80 zum dritten Bereich 100 unterbrechen. Sind die Verbindungen unterbrochen, kann die Spindelmutter 20 und somit das Schubrohr 30 aufgrund der dadurch bedingten Volumenkonstanz im ersten Bereich 70 und zweiten Bereich 80 nicht mehr bewegt werden. Auf diese Weise kann vergleichsweise einfach sichergestellt werden, dass das Ruder fest in seiner Position verbleibt.

Um einen Anschlag der Spindelmutter 20 oder des Schubrohrs 30 an das erste Gehäuse 40 zu verhindern, weist der Linearantrieb eine erste Feder 140 am linken Anschlag und eine zweite Feder 142 am rechten Anschlag auf. Die erste Feder 140 und die zweite Feder 142 bremsen die Spindelmutter 20 und das Schubrohr 30 kurz vor Erreichen des Anschlags, um so sowohl eine Beschädigung der Spindel 10 als auch unnötige Geräuschentwicklung zu vermeiden.

Zur Erhöhung der Stabilität ist im gezeigten Linearantrieb am Ende der Spindel 10 innerhalb des Schubrohrs 30 ein Spindelhilfslager 150 angeordnet. Das Spindelhilfslager 150 verhindert eine mechanische Beschädigung der Spindel bei großen Querbeschleunigungen.

Um die Spindel 10 in Rotation zu versetzen, weist der Linearantrieb einen ersten Elektromotor 160 und einen zweiten Elektromotor 170 auf. Der erste Elektromotor 160 und der zweite Elektromotor 170 weisen einen gemeinsamen Rotor 240 und einen gemeinsamen Statorrücken 250 auf. Durch die Dopplung können der erste Elektromotor 160 und der zweite Elektromotor 170 kleiner ausfallen. Gleichzeitig wird so für Redundanz gesorgt, da auch nach Ausfall eines Elektromotors das Ruder bewegbar bleibt.

Der zweite Elektromotor 170 ist entsprechend dem ersten Elektromotor 160 aufgebaut. Besonders bevorzugt sind der erste Elektromotor 160 und der zweite Elektromotor 170 baugleich, was Wartung und Vorratshaltung von Ersatzteilen vereinfacht.

Der erste Elektromotor 160 und der zweite Elektromotor 170 sind über den Statorrücken 250 über federnde Lagerung 162 mit dem ersten Gehäuse 40 verbunden. Durch die federnde Lagerung 162 werden Schwingungen aus dem gedämpften ersten Elektromotor 160 und dem gedämpften zweiten Elektromotor 170 auf das erste Gehäuse 40 und dadurch auf den Druckkörper 210 gedämpft. Hierdurch können auch weniger akustisch optimierte Elektromotoren verwendet werden.

Der Rotor 240 wird über die Kupplung 166 mit der Spindel 10 verbunden.

Um die Position Rotors 240 erfassen zu können, weist der Rotor 240 einen Polradlagegeber 164 auf.

Um die Position der Spindelmutter 20 auf der Spindel 10 und somit die Steuerposition des Ruders erfassen zu können, weist die Spindelmutter 20 einen Positionsmagneten 180 auf. In das erste Gehäuse 40 ist ein Lagegeber 182 integriert, sodass die Position der Spindelmutter 20 auf der Spindel 10 messbar ist.

Um bei einem Ausfall des elektrischen Systems das Ruder weiter bedienen zu können, weist der Linearantrieb einen Hilfsantrieb190 auf, welcher verschiebbar angeordnet ist. Durch Verschieben des Hilfsantriebs190 werden Ritzel 192 und Zahnkranz 194 in Kontakt gebracht. Der Hilfsantriebist manuell oder pneumatisch oder hydraulisch betätigbar.

Um ein Verdrehen des Schubrohrs 30 zu verhindern, kann eine Verdrehsicherung 220 vorgesehen sein. Auf die Verdrehsicherung 220 kann beispielsweise verzichtet werden, wenn das Rudergestänge über die Anlenkung 200 diese Funktion bereits erfüllt.

### Bezugszeichen

- 10: Spindel
- 12: Spindellager
- 14: Spindeldichtung
- 20: Spindelmutter
- 30: Schubrohr
- 40: erstes Gehäuse
- 50: Schubrohrdichtung
- 60: erste Dichtung
- 70: erster Bereich
- 80: zweiter Bereich
- 90: Druckausgleichsbehälter
- 92: Kolben
- 94: Kolbenstange
- 96: Kolbenzylinder
- 98: Kolbendichtung
- 100: dritter Bereich
- 110: vierter Bereich
- 120: erstes Ventil
- 130: zweites Ventil
- 140: erste Feder
- 142: zweite Feder
- 150: Spindelhilfslager
- 160: erster Elektromotor
- 162: federnde Lagerung
- 164: Polradlagegeber
- 166: Kupplung
- 170: zweiter Elektromotor
- 180: Positionsmagnet
- 182: Lagegeber
- 190: Hilfsantrieb
- 192: Ritzel
- 194: Zahnkranz
- 200: Anlenkung
- 210: Druckkörper
- 220: Verdrehsicherung
- 230: Spindellagergehäuse
- 240: Rotor
- 250: Statorrücken

## Patentansprüche

1. Linearantrieb für eine Schiffrudermaschine, wobei der Linearantrieb ein Schubrohr (30), eine Spindeldichtung (14), eine Schubrohrdichtung (50), eine Spindel (10) und eine Spindelmutter (20) aufweist, wobei die Spindelmutter (20) mit dem Schubrohr (30) verbunden ist, wobei die Spindel (10) ortsfest gelagert ist und die Spindelmutter (20) und das Schubrohr (30) linear bewegt werden, wobei der Linearantrieb ein erstes Gehäuse (40) aufweist, wobei das erste Gehäuse (40) den Bereich der Spindel (10) umgibt, auf welchem die Spindelmutter (20) bewegbar ist, wobei das erste Gehäuse (40) dichtend mit dem Schubrohr (30) und dichtend mit der Spindel (10) verbunden ist, wobei die Spindelmutter (20) oder das Schubrohr (30) wenigstens eine erste Dichtung (60) aufweist, wobei die wenigstens eine erste Dichtung (60) zum ersten Gehäuse (40) dichtend abschließt, wobei durch das erste Gehäuse (40), die Spindel (10), die Spindeldichtung (14), dem Schubrohr (30) und die erste Dichtung (60) ein erster Bereich (70) gebildet wird, wobei durch das erste Gehäuse (40), das Schubrohr (30), die Schubrohrdichtung (50) und die erste Dichtung (60) ein zweiter Bereich (80) gebildet wird, wobei der erste Bereich (70) und der zweite Bereich (80) flüssigkeitsgefüllt sind, wobei der Linearantrieb einen ersten Druckausgleichsbehälter (90) aufweist, wobei der erste Bereich (70) und der zweite Bereich (80) mit dem ersten Druckausgleichsbehälter (90) verbunden sind.

2. Linearantrieb nach Anspruch 1, **dadurch gekennzeichnet, dass** der erste Druckausgleichsbehälter (90) einen Kolben (92), eine Kolbenstange (94) und einen Kolbenzylinder (96) aufweist, wobei der erste Druckausgleichsbehälter (90) einen dritten Bereich (100) und einen vierten Bereich (110) aufweist, wobei der dritte Bereich (100) mit dem ersten Bereich (70) und dem zweiten Bereich (80) verbunden ist und wobei die Kolbenstange (94) im dritten Bereich (100) angeordnet ist.

3. Linearantrieb nach Anspruch 2, **dadurch gekennzeichnet, dass** der vierte Bereich (110) eine Verbindung zu dem Boot umgebenden Wasser aufweist und eine Druckkompensation des Schubrohrs (30) bewirkt.

4. Linearantrieb nach einem der Ansprüche 2 oder 3, **dadurch gekennzeichnet, dass** der erste Bereich (70) über ein erstes Ventil (120) mit dem dritten Bereich (100) verbunden ist.

5. Linearantrieb nach einem der Ansprüche 2 bis 4, **dadurch gekennzeichnet, dass** der zweite Bereich (80) über ein zweites Ventil (130) mit dem dritten Bereich (100) verbunden ist.

6. Linearantrieb nach einem der vorangegangenen Ansprüche, **dadurch gekennzeichnet, dass** der Linearantrieb eine erste Feder (140) und eine zweite Feder (142) aufweist, wobei die erste Feder (140) und die zweite Feder (142) an gegenüberliegenden Positionen des Bereiches angeordnet sind, in welchem die Spindelmutter (20) auf der Spindel (10) bewegbar ist.

7. Linearantrieb nach Anspruch 6, **dadurch gekennzeichnet, dass** die erste Feder (140) eine erste Tellerfeder ist und wobei die zweite Feder (142) eine zweite Tellerfeder ist.

8. Linearantrieb nach einem der vorangegangenen Ansprüche, **dadurch gekennzeichnet, dass** der Linearantrieb einen Lagesensor aufweist, wobei der Lagesensor die Lage der Spindelmutter (20) detektiert.

9. Linearantrieb nach Anspruch 8, **dadurch gekennzeichnet, dass** der Lagesensor ein magnetostriktiver Lagesensor ist.

10. Linearantrieb nach einem der vorangegangenen Ansprüche, **dadurch gekennzeichnet, dass** der Linearantrieb einen zuschaltbaren manuellen hydraulischen oder pneumatischen Hilfsantrieb (190) aufweist.

## Claims

1. Linear drive for a ship steering engine, wherein the linear drive comprises a thrust tube (30), a spindle seal (14), a thrust tube seal (50), a spindle (10) and a spindle nut (20), wherein the spindle nut (20) is connected to the thrust tube (30), wherein the spindle (10) is mounted in a stationary manner and the spindle nut (20) and the thrust tube (30) are moved linearly, wherein the linear drive comprises a first housing (40), wherein the first housing (40) surrounds the region of the spindle (10) on which the spindle nut (20) is movable, wherein the first housing (40) is connected in a sealing manner to the thrust tube (30) and in a sealing manner to the spindle (10), wherein the spindle nut (20) or the thrust tube (30) comprises at least one first seal (60), wherein the at least one first seal (60) terminates in a sealing manner with respect to the first housing (40), wherein a first region (70) is formed by the first housing (40), the spindle (10), the spindle seal (14), the thrust tube (30) and the first seal (60), wherein a second region (80) is formed by the first housing (40), the thrust tube (30), the thrust tube seal (50) and the first seal (60), wherein the first region (70) and the second region (80) are fluid-cooled, wherein the linear drive comprises a first pressure compensation vessel (90), wherein the first region (70) and the second region (80) are connected to the first pressure compensation vessel (90).

2. Linear drive according to Claim 1, **characterized in that** the first pressure compensation vessel (90) comprises a piston (92), a piston rod (94) and a piston cylinder (96), wherein the first pressure compensation vessel (90) comprises a third region (100) and a fourth region (110), wherein the third region (100) is connected to the first region (70) and the second region (80) and wherein the piston rod (94) is arranged in the third region (100).

3. Linear drive according to Claim 2, **characterized in that** the fourth region (110) comprises a connection to the water surrounding the boat and brings about a pressure compensation of the thrust tube (30).

4. Linear drive according to any one of Claims 2 or 3, **characterized in that** the first region (70) is connected to the third region (100) via a first valve (120) .

5. Linear drive according to any one of Claims 2 to 4, **characterized in that** the second region (80) is connected to the third region (100) via a second valve (130) .

6. Linear drive according to any one of the preceding claims, **characterized in that** the linear drive comprises a first spring (140) and a second spring (142), wherein the first spring (140) and the second spring (142) are arranged on opposing positions of the region in which the spindle nut (20) is movable on the spindle (10).

7. Linear drive according to Claim 6, **characterized in that** the first spring (140) is a first plate spring and wherein the second spring (142) is a second plate spring.

8. Linear drive according to any one of the preceding Claims, **characterized in that** the linear drive comprises a position sensor, wherein the position sensor detects the position of the spindle nut (20).

9. Linear drive according to Claim 8, **characterized in that** the position sensor is a magnetostrictive position sensor.

10. Linear drive according to any one of the preceding claims, **characterized in that** the linear drive comprises a switchable manual, hydraulic or pneumatic auxiliary drive (190).

## Revendications

1. Entraînement linéaire pour un appareil à gouverner d'un navire, l'entraînement linéaire comprenant un tube de poussée (30), un joint d'étanchéité (14) de broche, un joint d'étanchéité (50) de tube de poussée, une broche (10) et un écrou de broche (20), dans lequel l'écrou de broche (20) est relié au tube de poussée (30), dans lequel la broche (10) est montée de manière fixe et l'écrou de broche (20) et le tube de poussée (30) sont déplacés linéairement, dans lequel l'entraînement linéaire comprend un premier carter (40), dans lequel le premier carter (40) entoure la zone de la broche (10) sur laquelle l'écrou de broche (20) est déplaçable, dans lequel le premier carter (40) est relié de manière étanche au tube de poussée (30) et de manière étanche à la broche (10), dans lequel l'écrou de broche (20) ou le tube de poussée (30) comprend au moins un premier joint d'étanchéité (60), dans lequel ledit au moins un premier joint d'étanchéité (60) se termine de manière étanche par rapport au premier carter (40), dans lequel une première zone (70) est formée par le premier carter (40), la broche (10), le joint d'étanchéité (14) de broche, le tube de poussée (30) et le premier joint d'étanchéité (60), dans lequel une deuxième zone (80) est formée par le premier carter (40), le tube de poussée (30), le joint d'étanchéité (50) de tube de poussée et le premier joint d'étanchéité (60), dans lequel la première zone (70) et la deuxième zone (80) sont remplies de fluide, dans lequel l'entraînement linéaire comprend un premier récipient de compensation de pression (90), dans lequel la première zone (70) et la deuxième zone (80) sont reliées au premier récipient de compensation de pression (90) .

2. Entraînement linéaire selon la revendication 1, **caractérisé en ce que** le premier récipient de compensation de pression (90) comprend un piston (92), une tige de piston (94) et un cylindre de piston (96), le premier récipient de compensation de pression (90) comprenant une troisième zone (100) et une quatrième zone (110), la troisième zone (100) étant reliée à la première zone (70) et à la deuxième zone (80) et la tige de piston (94) étant disposée dans la troisième zone (100).

3. Entraînement linéaire selon la revendication 2, **caractérisé en ce que** la quatrième zone (110) comprend une liaison à l'eau entourant le bateau et provoque une compensation de pression du tube de poussée (30).

4. Entraînement linéaire selon la revendication 2 ou 3, **caractérisé en ce que** la première zone (70) est reliée à la troisième zone (100) par le biais d'une première soupape (120).

5. Entraînement linéaire selon l'une des revendications 2 à 4, **caractérisé en ce que** la deuxième zone (80) est reliée à la troisième zone (100) par le biais d'une deuxième soupape (130).

6. Entraînement linéaire selon l'une des revendications précédentes, **caractérisé en ce que** l'entraînement linéaire comprend un premier ressort (140) et un deuxième ressort (142), le premier ressort (140) et le deuxième ressort (142) étant disposés à des positions opposées de la zone dans laquelle l'écrou de broche (20) est déplaçable sur la broche (10).

7. Entraînement linéaire selon la revendication 6, **caractérisé en ce que** le premier ressort (140) est une première rondelle-ressort, et le deuxième ressort (142) étant une deuxième rondelle-ressort.

8. Entraînement linéaire selon l'une des revendications précédentes, **caractérisé en ce que** l'entraînement linéaire comprend un capteur de position, le capteur de position détectant la position de l'écrou de broche (20).

9. Entraînement linéaire selon la revendication 8, **caractérisé en ce que** le capteur de position est un capteur de position magnétostrictif.

10. Entraînement linéaire selon l'une des revendications précédentes, **caractérisé en ce que** l'entraînement linéaire comprend un entraînement auxiliaire (190) manuel, hydraulique ou pneumatique pouvant être raccordé.
